# EUROPÄISCHE PATENTSCHRIFT

(11) **EP 0 770 247 B1**
(45) Veröffentlichungstag und Bekanntmachung des Hinweises auf die Patenterteilung: **04.03.1998**
(21) Anmeldenummer: 95926853.3
(22) Anmeldetag: 11.07.1995
(51) Int. Cl.: G06K 11/18

(54) **UNTERLAGE FÜR EINE COMPUTER-MAUS**
SUPPORT FOR COMPUTER MOUSE
SUPPORT POUR SOURIS D'ORDINATEUR

(30) Priorität: 11.07.1994 DE 4424404
(43) Veröffentlichungstag der Anmeldung: 02.05.1997
(73) Patentinhaber: Hirsch, Karl, 9064 Pischeldorf (Kärnten) (AT)
(72) Erfinder: Hirsch, Karl, 9064 Pischeldorf (Kärnten) (AT)
(74) Vertreter: Lieck, Hans-Peter, Dipl.-Ing.
(86) Internationale Anmeldenummer: EP9502690
(87) Internationale Veröffentlichungsnummer: WO9602041

(56) Entgegenhaltungen:
- FR-A- 2 685 112
- US-A- 4 799 054

## Beschreibung

Die Erfindung betrifft eine Unterlage für eine Computer-Maus, ein sogenanntes Mouse-Pad, mit einer Unterfolie aus Schaumstoff, auf die eine Trägerschicht aufkaschiert ist, und mit einer über der Trägerschicht liegenden, transparenten Oberfolie, die am Rand durchgehend mit der Trägerschicht und der Unterfolie verschweißt ist.

Derartige Unterlagen dienen zur bequemen Betätigung der Computer-Maus. Die Maus bzw. das Mausgerät wird vom Benutzer auf der Unterlage hin- und herbewegt, wobei die Kugel der Maus auf der Oberfolie abrollt. Die Schaumstoff-Unterfolie hält die Unterlage auf der Arbeitsfläche fest, läßt die Kugel sanft abrollen und dämpft die Schwingungen, die bei der Betätigung der Maus-Tasten entstehen.

Die Unterlagen sind häufig mit Bild- und/oder Schriftdarstellungen versehen, um sie ansprechender aussehen zu lassen oder sie damit als Werbeträger zu nutzen.

Der Erfindung liegt die Aufgabe zugrunde, eine Unterlage für eine Computer-Maus zu schaffen, die ein besonders ansprechendes Aussehen hat.

Diese Aufgabe ist erfindungsgemäß in verschiedenen, auf dem gleichen Lösungsgedanken beruhenden Alternativen durch die in den Ansprüchen 1, 2 und 3 gekennzeichneten Unterlagen für eine Computer-Maus gelöst.

Der erfindungsgemäße Lösungsgedanke besteht darin, unter der transparenten Oberfolie mindestens eine dünne, farbige Flüssigkeitsschicht vorzusehen, in der sich die Flüssigkeit, weil sie den ihr zur Verfügung stehenden Raum nicht vollständig ausfüllt, schlierenförmig verteilt, wobei sich diese Verteilung und entsprechend das Aussehen durch die Betätigung der Computer-Maus in weitgehend zufälliger Weise verändert. Das gibt der Unterlage ein sehr interessantes Aussehen, insbesondere in Verbindung mit einem unveränderlichen Bild- und/oder Schriftaufdruck, mit dem sich die mindestens eine schlierenförmige Flüssigkeitsschicht optisch überlagert.

Bei der Unterlage nach Anspruch 1 ist eine Flüssigkeitsschicht vorgesehen, die zwischen der flüssigkeitsdichten Trägerschicht und der Oberfolie eingeschlossen ist.

Bei der Unterlage nach Anspruch 2 sind mindestens zwei Flüssigkeitsschichten vorgesehen, und zwar zwischen der flüssigkeitsdichten Trägerschicht und einer Trennfolie, zwischen einer Trennfolie und der Oberfolie und gegebenenfalls zwischen benachbarten Trennfolien.

Bei der Unterlage nach Anspruch 3 befindet sich eine Flüssigkeitsschicht jeweils zwischen benachbarten Trennfolien und gewünschtenfalls zusätzlich zwischen der obersten Trennfolie und der Oberfolie. Hierbei braucht die Trägerschicht nicht flüssigkeitsdicht zu sein. Außerdem ist diese Lösungsalternative der Ausgangspunkt für die Weiterbildung nach Anspruch 4, bei der mindestens eine Flüssigkeitsschicht quasi vertikal in zwei Bereiche unterteilt ist, in denen sich jeweils eine eigene farbige Flüssigkeit befindet, was besonders interessante optische Effekte gibt. Zur Unterteilung in die Bereiche dienen flüssigkeitsdichte Schweißnähte zwischen den benachbarten Trennfolien. Diese Schweißnähte erfassen ausdrücklich nicht die Trägerschicht oder die Oberfolie. Eine in der Fläche verlaufende Schweißnaht an der Oberfläche würde das Abrollen der Maus-Kugel stören. Längs einer die Trägerschicht erfassenden Schweißnaht würde herstellungsbedingt die Schaumstoff-Unterfolie zusammengedrückt sein, was unschön aussieht und ebenfalls das Abrollen der Kugel stören kann.

Ein etwaiger Bild- und/oder Schriftaufdruck ist vorzugsweise gemäß Anspruch 5 angebracht, was den Vorteil hat, daß das Druckbild nicht zerkratzt wird und keine Farbpigmente die Kugel der Maus verschmutzen.

Für die farbige Flüssigkeit(an) hat sich reines Pflanzenöl als geeignet erwiesen. Sollte infolge einer Beschädigung des Mouse-Pads eine Undichtigkeit auftreten und Flüssigkeit auslaufen, sind keinerlei Gefährdungen von Personen durch z.B. Vergiftungen zu befürchten. Andererseits verdunstet Pflanzenöl nicht durch die Folien- oder Trägerschicht hindurch, so daß die optische Wirkung der Flüssigkeit(an) und damit die Haltbarkeit des Mouse-Pads auf Dauer gewährleistet ist.

Zur Einfärbung des Pflanzenöls sind diesem vorzugsweise Kosmetika beigemischt, so daß auch von den Färbemitteln keinerlei Gefahr für Personen ausgeht, die mit eventuell aus einem beschädigten Mouse-Pad austretender Flüssigkeit in Berührung kommen. Alle Folien und Schichten der erfindungsgemäßen Unterlagen sind vorzugsweise aus PVC hergestellt und damit voll recyclebar.

Im folgenden ist die Erfindung mit weiteren vorteilhaften Einzelheiten anhand zweier schematisch dargestellter Ausführungsbeispiele näher erläutert. Es zeigen:
- Figur 1 -: eine Draufsicht auf eine Unterlage für eine Computer-Maus;
- Figur 2 -: einen Teil-Querschnitt durch die Unterlage nach Figur 1;
- Figur 3 -: eine Draufsicht auf eine andere Unterlage für eine Computer-Maus;
- Figur 4 -: einen Teil-Querschnitt durch die Unterlage nach Figur 3.

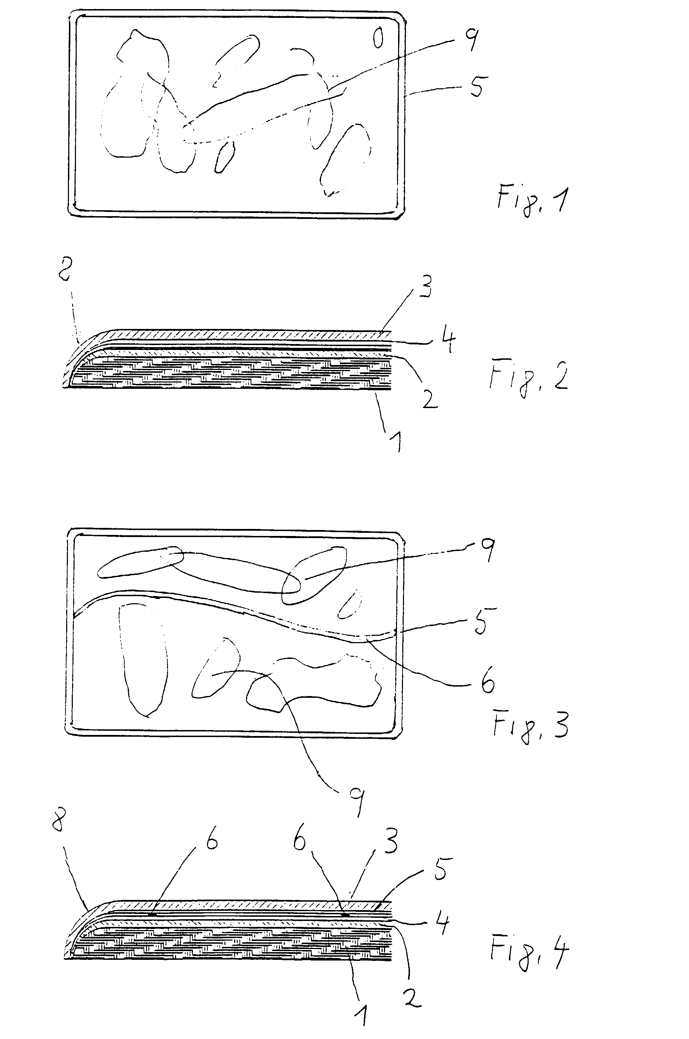

Die Unterlage nach Figuren 1 und 2 umfaßt eine Unterfolie 1 aus PVC-Schaumstoff, auf die eine flüssigkeitsdichte Trägerschicht 2 aus PVC aufkaschiert ist. Über der Trägerschicht 2 liegt eine transparente Oberfolie 3 (ebenfalls aus PVC), die auf ihrer Oberseite in nicht näher gezeigter Weise leicht genarbt ist, um ein sicheres Abrollen der Maus-Kugel zu gewährleisten. Zwischen der Trägerschicht 2 und der Oberfolie 3 befindet sich eine transparente Trennfolie 4. Alle Folien und die Trägerschicht sind am Rand 8 der rechteckigen Unterlage rundum durchgehend miteinander flüssigkeitsdicht verschweißt.

Zwischen der Trägerschicht 2 und der Trennfolie 4 befindet sich eine farbige Flüssigkeit. Ebenso befindet sich zwischen der Trennfolie 4 und der Oberfolie 3 eine farbige Flüssigkeit anderer Farbe. Die Flüssigkeiten bestehen aus handelsüblichem reinem Pflanzenöl, denen als Färbemittel Kosmetika beigegeben sind. Dabei wird die jeweilige Flüssigkeit auf die untere Schicht bzw. Folie ohne weitere Einfassungsmittel aufgebracht und unmittelbar anschließend die obere Folie darübergelegt und verschweißt. Dieses ist auf Grund der Viskosität des Pflanzenöls ohne weiteres möglich. Die Flüssigkeiten sind in der Figur 2 der Übersichtlichkeit halber nicht gesondert dargestellt. In beiden Fällen ist die Menge der Flüssigkeit so bemessen, daß der zur Verfügung stehende Raum nicht vollständig ausgefüllt ist. Bei Mouse-Pads mittlerer Größe enthält der Raum zwischen zwei Folien bzw. Schichten etwa 0,022 l Flüssigkeit, bei größeren Mouse-Pads können es auch 0,025 l sein. Das führt dazu, daß sich die Flüssigkeit schlierenförmig verteilt und sich die Schlieren beim Abrollen der Maus-Kugel ständig verändern. Die in Figur 1 angedeuteten Schlieren 9 entsprechen deshalb nur einem momentanen Zustand.

Die in den Figuren 3 und 4 gezeigte Unterlage entspricht grundsätzlich derjenigen nach den Figuren 1 und 2. Es sind jedoch zwei flüssigkeitsdichte Trennfolien 4 und 5 aus PVC vorhanden, mit der Möglichkeit, farbige Flüssigkeit zwischen der Trägerschicht 2 und der unteren Trennfolie 4, zwischen der Trennfolie 4 und 5 sowie der oberen Trennfolie 5 und der Oberfolie 3 vorzusehen. Zusätzlich sind die beiden Trennfolien 4 und 5 durch eine in einem unregelmäßigen Linienzug über die Fläche der Unterlage verlaufende, flüssigkeitsdichte Schweißnaht 6 miteinander verbunden, welche den Raum zwischen den beiden Trennfolien 4 und 5 in zwei Bereiche unterteilt, die jeweils mit einer eigenen farblich unterschiedlichen Flüssigkeit gefüllt sein können. Dadurch lassen sich die vielfältigsten farbigen Effekte erzeugen. Ein etwaiger Bild- und/oder Schriftaufdruck ist in spiegelbildlicher Form an der Unterseite der Oberfolie 3 angebracht, wobei sich natürlich der durch die schlierenförmigen Flüssigkeits-Schichten erzeugte optische Eindruck mit dem Aufdruck überlagert.

## Patentansprüche

1. Unterlage für eine Computer-Maus mit einer Unterfolie (1) aus Schaumstoff, auf die eine Trägerschicht (2) aufkaschiert ist, und mit einer über der Trägerschicht (2) liegenden, transparenten Oberfolie (3), die am Rand (8) durchgehend mit der Trägerschicht(2) und der Unterfolie (1) verschweißt ist,
dadurch gekennzeichnet,
daß die Trägerschicht (2) flüssigkeitsdicht ausgebildet ist und daß sich zwischen der Trägerschicht (2) und der Oberfolie (3) eine farbige Flüssigkeit befindet, wobei das Flüssigkeitsvolumen geringer als das zur Verfügung stehende Raumvolumen ist.

2. Unterlage für eine Computer-Maus mit einer Unterfolie (1) aus Schaumstoff, auf die eine Trägerschicht (2) aufkaschiert ist, und mit einer über der Trägerschicht liegenden, transparenten Oberfolie (3), die am Rand (8) durchgehend mit der Trägerschicht und der Unterfolie (1) verschweißt ist,
dadurch gekennzeichnet,
daß die Trägerschicht (2) flüssigkeitsdicht ausgebildet ist, daß sich zwischen der Trägerschicht (2) und der Oberfolie (3) mindestens eine transparente Trennfolie (4, 5) befindet, die am Rand (8) durchgehend mit der Unterfolie (1) der Trägerschicht (2) und der Oberfolie (3) verschweißt ist, und daß sich zwischen der Trägerschicht (2) und der Trennfolie (4), zwischen der Trennfolie (5) und der Oberfolie (3) und gegebenenfalls zwischen den Trennfolien (4, 5) jeweils eine farbige Flüssigkeit befindet, wobei die Flüssigkeitsvolumina jeweils geringer als das jeweils zur Verfügung stehende Raumvolumen sind.

3. Unterlage für eine Computer-Maus mit einer Unterfolie (1) aus Schaumstoff, auf die eine Trägerschicht (2) aufkaschiert ist, und mit einer über der Trägerschicht (2) liegenden, transparenten Oberfolie (3), die am Rand (8) durchgehend mit der Trägerschicht (2) und der Unterfolie (1) verschweißt ist,
dadurch gekennzeichnet,
daß sich zwischen der Trägerschicht (2) und der Oberfolie (3) mindestens zwei Trennfolien (4, 5) befinden, von denen mindestens die obere (5) oder oberen transparent ist bzw. sind und die am Rand (8) durchgehend miteinander sowie mit der Unterfolie (1), der Trägerschicht (2) und der Oberfolie (3) verschweißt sind, und daß sich mindestens zwischen den Trennfolien (4, 5) jeweils eine farbige Flüssigkeit befindet, wobei das Flüssigkeitsvolumen geringer als das zur Verfügung stehende Raumvolumen ist.

4. Unterlage nach Anspruch 3,
dadurch gekennzeichnet,
daß der Raum zwischen benachbarten Trennfolien (4, 5) durch mindestens eine flüssigkeitsdichte Schweißnaht (6) zwischen den beiden Trennfolien (4, 5) in mindestens zwei Bereiche unterteilt ist, in denen sich jeweils eine eigene farbige Flüssigkeit befindet.

5. Unterlage nach Anspruch 1,
dadurch gekennzeichnet,
daß die Oberfolie (3) auf ihrer Unterseite mit einem spiegelverkehrten Bild- und/oder Schriftaufdruck versehen ist.

6. Unterlage nach Anspruch 1,
dadurch gekennzeichnet,
daß die Flüssigkeit ein reines Pflanzenöl ist.

7. Unterlagen nach Anspruch 6,
dadurch gekennzeichnet,
daß dem Pflanzenöl zur Einfärbung Kosmetika beigemischt sind.

## Claims

1. A support device for a computer mouse comprising a lower foil (1) made of foam material onto which a carrier layer (2) has been laminated and including, disposed above the carrier layer (2), a transparent upper foil (3) which is welded continuously along the edge (8) to the carrier layer (2) and the lower foil (1), characterized in that the carrier layer (2) is arranged liquid-tight and that between the carrier layer (2) and the upper foil (3) a coloured liquid is provided, with the liquid volume being less than the available space volume.

2. A support device for a computer mouse comprising a lower foil (1) made of foam material onto which a carrier layer (2) has been laminated and including, disposed above the carrier layer, a transparent upper foil (3) which is welded continuously along the edge (8) to the carrier layer and the lower foil (1), characterized in that the carrier layer (2) is arranged liquid-tight, that between the carrier layer (2j and the upper foil (3) at least one transparent partitioning foil (4, 5) is provided, which along the edge (8) is continuously welded together with the lower foil (1), the carrier layer (2) and the upper foil (3), and that between the carrier layer (2) and the partitioning foil (4), between the partitioning foil (5) and the upper foil (3) and optionally between the partitioning foils (4, 5) in each case a coloured liquid is situated, with the liquid volumes being less than the available space volume.

3. A support device for a computer mouse comprising a lower foil (1) made of foam material onto which a carrier layer (2) has been laminated and including, disposed above the carrier layer (2), a transparent upper foil (3) which is welded continuously along the edge (8) to the carrier layer (2) and the lower foil (1), characterized in that between the carrier layer (2) and the upper foil (3) at least two partitioning foils (4, 5) are provided, of which at least the uppermost one(s) (5) is/are transparent and which are welded together continuously along the edge (8) as well as to the lower foil (1), the carrier layer (2) and the upper foil (3), and that at least between the partitioning foils (4, 5) one coloured liquid is provided, with the liquid volumes being less than the available space volume.

4. A support device as claimed in claim 3, characterized in that the cavity between adjoining partitioning foils (4, 5) is subdivided into at least two regions by a liquid-tight welding seam (6) between the two partitioning foils (4, 5), each region being occupied by its own coloured liquid.

5. A support device as claimed in claim 1, characterized in that the upper foil (3) is provided on its underside with a pictorial and/or written imprint in reversed mirror image form.

6. A support device as claimed in claim 1, characterized in that the liquid is a pure vegetable oil.

7. A support device as claimed in claim 6, characterized in that cosmetics are admixed to the vegetable oil for colouring purposes.

## Revendications

1. Support pour une souris d'ordinateur avec une feuille inférieure (1) en mousse sur laquelle est contrecollée une couche de support (2), et avec une feuille supérieure transparente (3) située au-dessus de la couche de support (2) qui est soudée au bord (8) d'une manière continue à la couche de support (2) et la feuille inférieure (1)
caractérisé en ce que
la couche de support (2) est réalisée d'une manière étanche au liquide et en ce qu'il se trouve entre la couche de support (2) et la feuille supérieure (3) un liquide de couleur, le volume de liquide étant plus petit que le volume d'espace disponible.

2. Support pour une souris d'ordinateur avec une feuille inférieure (1) en mousse sur laquelle est contrecollée une couche de support (2), et avec une feuille supérieure transparente (3) située sur la couche de support qui est soudée au bord (8) d'une manière continue à la couche de support et la feuille inférieure (1),
caractérisé en ce que
la couche de support (2) est réalisée d'une manière étanche au liquide, en ce qu'il se trouve entre la couche de support (2) et la feuille supérieure (3) au moins une feuille de séparation transparente (4, 5) qui est soudée au bord (8) d'une manière continue à la feuille inférieure (1) de la couche de support (2) et la feuille supérieure (3) et en ce qu'il se trouve entre la couche de support (2) et la feuille de séparation (4), entre la feuille de séparation (5) et la feuille supérieure (3) et le cas échéant entre les feuilles de séparation (4, 5) respectivement un liquide en couleur, le volume de liquide étant respectivement plus petit que le volume d'espace respectivement disponible.

3. Support pour une souris d'ordinateur avec une feuille inférieure (1) en mousse sur laquelle est contrecollée une couche de support (2), et avec une feuille supérieure transparente (3) située au-dessus de la couche de support (2) qui est soudée au bord (8) d'une manière continue à la couche de support (2) et la feuille inférieure (1),
caractérisé en ce qu'
il se trouve entre la couche de support (2) et la feuille supérieure (3) au moins deux feuilles de séparation (4, 5) dont au moins la ou les feuilles supérieures (5) sont transparentes et qui sont soudées au bord (8) d'une manière continue les unes aux autres ainsi qu'à la feuille inférieure (1), la couche de support (2) et la feuille supérieure (3), et en ce qu'il se trouve au moins entre les feuilles de séparation (4, 5) respectivement un liquide en couleur, le volume de liquide étant plus petit que le volume d'espace disponible.

4. Support selon la revendication 3,
caractérisé en ce que
l'espace entre les feuilles de séparation avoisinantes (4, 5) est divisé par au moins un cordon de soudure (6) étanche au liquide entre les deux feuilles de séparation (4, 5) en au moins deux zones dans lesquelles se trouve respectivement un liquide de couleur propre.

5. Support selon la revendication 1,
caractérisé en ce que
la feuille supérieure (3) est pourvue sur son côté inférieur d'une impression d'image et/ou d'écriture spéculairement identique.

6. Support selon la revendication 1,
caractérisé en ce que
le liquide est une huile végétale pure.

7. Support selon la revendication 6,
caractérisé en ce que des cosmétiques sont ajoutés à l'huile végétale en vue de la coloration.
